# EUROPÄISCHE PATENTANMELDUNG

(11) **EP 2 651 013 A2**
(43) Veröffentlichungstag der Anmeldung: **16.10.2013**
(21) Anmeldenummer: 13162766.3
(22) Anmeldetag: 08.04.2013
(51) Int. Cl.: H02K 5/08, H02K 5/22, H02K 15/10

(54) **Elektromotor und Verfahren zur Herstellung eines Strators für den Elektromotor**

(30) Priorität: 12.04.2012 DE 102012007186
(71) Anmelder: Hanning Elektro-Werke GmbH & Co. KG, 33813 Oerlinghausen (DE)
(72) Erfinder: Schweers, André, 32120 Hiddenhausen (DE)
(74) Vertreter: Hansen, Jochen

(57) **Zusammenfassung**

Die Erfindung betrifft einen Elektromotor mit einem Rotor, mit einer drehfest mit dem Rotor verbundenen und koaxial zu dem Rotor angeordneten Welle, mit wenigstens zwei Lager zum Stützen der Welle, mit wenigstens einem die Lager aufnehmenden Lagerschild und mit einem dem Rotor zugeordneten Stator, wobei der Stator als ein vergossener Stator ausgebildet ist mit einer Umhüllung aus einer Vergussmasse, wobei die Umhüllung Positioniermittel zum Positionieren eines Verbindungsmoduls relativ zu dem Stator und/oder Befestigungsmittel zum Festlegen des Verbindungsmodul an der Umhüllung aufweist.

## Beschreibung

Die Erfindung betrifft einen Elektromotor mit einem Rotor, mit einer drehfest mit dem Rotor verbundenen und koaxial zu dem Rotor angeordneten Welle, mit wenigstens zwei Lager zum Stützen der Welle, mit wenigstens einem die Lager aufnehmenden Lagerschild und mit einem dem Rotor zugeordneten Stator, wobei der Stator als ein vergossener Stator ausgebildet ist mit einer Umhüllung aus einer Vergussmasse.

Ferner betrifft die Erfindung ein Verfahren zur Herstellung eines Stators mit einer Umhüllung.

Aus der DE 20 2010 017 101 U1 ist ein Elektromotor zum Antrieb eines Ventilators mit einem Stator und einem relativ zu dem Stator drehbar gehaltenen Rotor bekannt. Der Rotor ist in einer Welle gehalten und über zwei Lager an einem Lagerschild abgestützt. Der Stator wird von einer Umhüllung umschlossen, die den Stator einerseits vor Feuchtigkeit und Staub schützt und andererseits eine gute Kühlung des Stators gewährleistet. Der Stator selbst ist im Bereich des Statorblechpakets an dem Lagerschild gehalten.

Aufgabe der vorliegenden Erfindung ist es, einen Elektromotor mit vergossenem Stator derart weiterzubilden, dass der konstruktive Aufwand weiter reduziert und die Kühlung des Stators weiter verbessert werden. Ferner ist es Aufgabe der Erfindung, ein Verfahren zur Herstellung des vergossenen Stators für den Elektromotor anzugeben.

Zur Lösung der Aufgabe ist die Erfindung in Verbindung mit dem Oberbegriff des Patentanspruchs 1 dadurch gekennzeichnet, dass die Umhüllung Positioniermittel (Referenzflächen, Stift) zum Positionieren eines Verbindungsmoduls (A-Lagerschild, B-Lagerschild, Klemmkastenoberteil) relativ zu dem Stator und/oder Befestigungsmittel (Bohrung) zum Festlegen des Verbindungsmoduls (A-Lagerschild, B-Lagerschild, Klemmkastenoberteil) an der Umhüllung aufweist.

Der besondere Vorteil der Erfindung besteht darin, dass die Umhüllung selbst Positioniermittel zum Positionieren von Verbindungsmodulen relativ zum Stator und/oder Befestigungsmittel zum Festlegen von Verbindungsmodulen an der Umhüllung aufweist. Die Umhüllung kann insofern den Stator vollständig umschließen, da der Stator über die Umhüllung gehalten wird und demzufolge eine unmittelbare Befestigung des Stators an einem Gehäuse oder den Lagerschilden beispielsweise im Bereich des Statorblechpakets entbehrlich ist. Durch die vollständige Umhüllung des Stators ergibt sich eine bessere Wärmeabfuhr sowie ein verbesserter Schutz vor Feuchtigkeitseintrag und Verschmutzung. Zudem vereinfacht sich die Montage, da Befestigungs- bzw. Positioniermittel an der äußeren Umhüllung und nicht an dem umschlossenen und weniger gut zugänglichen Stator vorgesehen sind.

Nach einer Weiterbildung der Erfindung ist der Elektromotor als ein gehäuseloser Elektromotor ausgebildet. Auf ein separates Motorgehäuse, welches den Stator mantelseitig bzw. radial umschließt, wird hierbei verzichtet. Die Gehäusefunktionen, insbesondere die Schutzfunktionen sowie die Abfuhr von Wärme, werden von der Umhüllung übernommen. Vorteilhaft vereinfacht sich der konstruktive Aufbau des Elektromotors durch den Verzicht auf das Gehäuse. Zudem sinken die Material- und Fertigungskosten, so dass der Elektromotor besonders wirtschaftlich hergestellt werden kann.

Nach einer Weiterbildung der Erfindung sind an der Umhüllung mantelseitig Kühlrippen und/oder Oberflächen vergrößernde Strukturen ausgebildet. Vorteilhaft verbessert sich die Kühlung des Stators durch das Vorsehen von Kühlrippen oder anderen Oberflächen vergrößernden Strukturen.

Ebenso kann vorgesehen sein, dass die Umhüllung Funktionsausformungen aufweist. Als Funktionsausformung kann beispielsweise ein Teil eines Klemmkastens für die elektrische Kontaktierung des Elektromotors, insbesondere ein Klemmkastenunterteil, oder eine Aufnahme für einen Fremdlüfter durch die Umhüllung gebildet werden. Durch das Vorsehen der Funktionsausformungen reduzieren sich der Montageaufwand und die Teilezahl, und die Herstellungskosten können reduziert werden.

Nach einer Weiterbildung der Erfindung sind als Verbindungsmodule das Lagerschild und/oder ein Klemmkasten und/oder Teile des Klemmkastens relativ zum Stator positionierbar und/oder an der Umhüllung festlegbar. Vorteilhaft wird hierdurch ein besonders einfacher Aufbau geschaffen, der eine wirtschaftliche Fertigung des Elektromotors begünstigt.

Nach einer Weiterbildung der Erfindung ist zwischen dem Verbindungsmodul und der Umhüllung zumindest abschnittsweise eine Wärmeleitpaste vorgesehen. Vorteilhaft wird durch das Vorsehen der Wärmeleitpaste die Kühlung des Stators weiter verbessert, indem Wärme von der Umhüllung über die Wärmeleitpaste an das Verbindungsmodul abgegeben wird.

Nach einer Weiterbildung der Erfindung sind als Positioniermittel an der Umhüllung Referenzflächen ausgebildet, an die das Verbindungsmodul mit einer Anlagefläche desselben anlegbar ist. Vorteilhaft können Referenzflächen als Positioniermittel in einfacher Weise und mit hoher Genauigkeit gefertigt werden. Die Anlage des Verbindungsmoduls an eine solche Referenzfläche ist in einfacher Weise möglich, sodass die Montage sich einfach gestaltet.

Nach einer Weiterbildung der Erfindung ist die Referenzfläche als eine radiale Referenzfläche, insbesondere als eine zu dem Stator koaxiale radiale Referenzfläche und/oder als eine axiale Referenzfläche an der Umhüllung ausgebildet. Vorteilhaft kann die relative Lage des Verbindungsmoduls zur Umhüllung bzw. zum Stator durch das Vorsehen von radialen und/oder axialen Referenzflächen hinreichend exakt bestimmt werden. Beispielsweise kann die Welle mit dem Rotor mit der geforderten Genauigkeit relativ zum Stator positioniert werden, indem das Lagerschild über die Positioniermittel relativ zur Umhüllung positioniert und die Welle über Lager in dem Lagerschild gehalten wird.

Nach einer Weiterbildung der Erfindung sind die radialen Referenzflächen als äußere radiale Referenzflächen oder als innere radiale Referenzflächen ausgebildet. Äußere radiale Referenzflächen können beispielsweise durch ein abschnittsweises Abdrehen der Umhüllung gefertigt werden. Innere radiale Referenzflächen können beispielsweise durch eine in der Umhüllung vorgesehene Ausnehmung, eine Bohrung oder eine Tasche gebildet werden.

Als Positioniermittel können weiterhin Positionierstifte oder dergleichen vorgesehen werden. Durch das Vorsehen einer Mehrzahl von Positioniermittel, beispielsweise einer Mehrzahl von Positionierstiften oder eines Positionierstifts in Verbindung mit einer Referenzfläche, kann zudem ein Verdrehschutz bei der Montage des Elektromotors realisiert werden.

Nach einer Weiterbildung der Erfindung sind als Befestigungsmittel Bohrungen zur Aufnahme von Verbindungselementen vorgesehen. Beispielsweise kann eine Bohrung ausgebildet werden zur Aufnahme eines Gewindeeinsatzes (Gewindehülse), in den zur Verbindung der Umhüllung mit dem Verbindungsmodul eine Schraube eingedreht wird. Ebenso kann eine Schraube mit einem selbstschneidenden Gewinde in eine hierfür in der Umhüllung vorgesehene Bohrung eingeschraubt werden, ohne dass eine Gewindehülse vorgesehen werden muss.

Als Befestigungsmittel können im Bereich der Umhüllung ferner Hinterschneidungen vorgesehen sein, in die das Verbindungsmodul mit einem Federabschnitt eingeklipst oder bajonettartig festgelegt wird. Ebenso kann die Gewindehülse selbst als Befestigungsmittel dienen, indem sie beim Herstellen der Umhüllung umgossen und so Teil der Umhüllung wird.

Nach einer Weiterbildung der Erfindung ist der Elektromotor als ein Innenläufermotor ausgebildet. Vorteilhaft kann der Stator eines Innenläufermotors in besonders effizienter Weise gekühlt werden. Beispielsweise kann ein Lüfter zur Kühlung des Stators über die Umhüllung vorgesehen sein. Der Lüfter kann auf der Welle selbst montiert sein oder als Fremdlüfter vorzugsweise axial an den Stator oder einem Lagerschild angeflanscht werden. Ebenso kann auf eine aktive Kühlung des Stators durch einen Lüfter verzichtet und die Wärme allein passiv über die Umhüllung abgeführt werden.

Nach einer Weiterbildung der Erfindung ist die Umhüllung aus einer aushärtbaren Vergussmasse gefertigt, wobei die Vergussmasse wenigstens anteilig aus Epoxidharz und/oder Polyurethan besteht. Vorteilhaft kann die Umhüllung aus der Vergussmasse in besonders einfacher und wirtschaftlicher Weise gefertigt werden. Epoxidharz bzw. Polyurethan sind hierbei bevorzugte Materialien, die einfach verarbeitet werden können und im ausgehärteten Zustand zur Ausbildung von Positionierung bzw. Befestigungsmitteln geeignet sind.

Zur Lösung der Erfindung weist das Verfahren zur Herstellung eines Stators mit einer Umhüllung die folgenden Verfahrensschritte auf:
- Positionieren des Stators in einer Vergussform
- Vergießen des Stators mit einer Vergussmasse zur Ausbildung der Umhüllung
- Ausbildung von Befestigungsmitteln zum Festlegen eines Verbindungsmoduls an der Umhüllung und/oder von Positioniermitteln zum Positionieren des Verbindungsmoduls relativ zum Stator an der Umhüllung.

Der besondere Vorteil der Erfindung besteht darin, dass wenigstens ein Verbindungsmodul, beispielsweise ein Lagerschild oder ein Klemmkasten, in besonders einfacher Weise relativ zum Stator ausgerichtet bzw. an der Umhüllung festgelegt werden kann. Die Umhüllung kann hierbei den Stator vollständig umgeben, sodass ein besonders guter Schutz vor Feuchtigkeitseintrag und Verschmutzung gegeben ist und Wärme aus dem Stator über die Umhüllung in besonders effizienter Weise abgeführt werden kann. Infolge der Positionierung bzw. Befestigung des Verbindungsmoduls an der Umhüllung vereinfacht sich darüber hinaus die Montage des Elektromotors mit der Folge, dass der Elektromotor besonders wirtschaftlich hergestellt werden kann.

Nach einer bevorzugten Ausführungsform der Erfindung werden die Positionier- bzw. Befestigungsmittel zumindest teilweise während des Vergießens des Stators ausgebildet. Zu diesem Zweck werden an der Vergussform vorgesehene Formkonturen, beispielsweise Taschen oder Kanten, abgeformt. Die Formkonturen dienen - sofern sie mit hinreichender Genauigkeit positioniert und ausgeformt werden können - unmittelbar als Positionier- bzw. Befestigungsmittel. Ebenfalls kann vorgesehen sein, dass die Formkonturen während des Vergießens des Stators vorgeformt, das heißt teilweise ausgebildet werden und in einem dem Vergießen nachgelagerten weiteren Herstellungsschritt fertiggestellt werden. Als nachgelagerter Herstellungsschritt kommt beispielsweise ein spanabhebendes Fertigungsverfahren infrage. Geeignet sind auch alle anderen Herstellungsverfahren, bei denen Referenzflächen oder ähnliche Befestigungs- bzw. Positioniermittel mit ausreichender Genauigkeit bereitgestellt werden. Die relative Lage des Stators einerseits und der Positionier- bzw. Befestigungsmittel andererseits kann zumindest in erster Näherung durch die Vergussform selbst definiert werden.

Nach einer Weiterbildung der Erfindung werden die Positionier- bzw. Befestigungsmittel nach dem Ausbilden der Umhüllung in einem weiteren Herstellungsschritt ausgebildet. Vorteilhaft kann auf das Vorsehen von Formkonturen in der Vergussform verzichtet werden. Hierdurch reduzieren sich die Werkzeugkosten. Zudem können die Positionier- bzw. Befestigungsmittel in einem von dem Vergießen getrennten, nachgelagerten Herstellungsschritt mit hoher Genauigkeit gefertigt werden. Bei der nachgelagerten Herstellung der Positionier- und Befestigungsmittel werden diese relativ zu dem vergossenen Stator positioniert.

Ausführungsbeispiele der Erfindung werden nachfolgend anhand der Zeichnungen näher erläutert.

Es zeigen:
- Figur 1: einen gehäuselosen Elektromotor mit einem umhüllten Stator nach einer ersten Ausführungsform und
- Figur 2: eine zweite Ausführungsform eines erfindungsgemäßen Elektromotors mit umhüllten Stator.

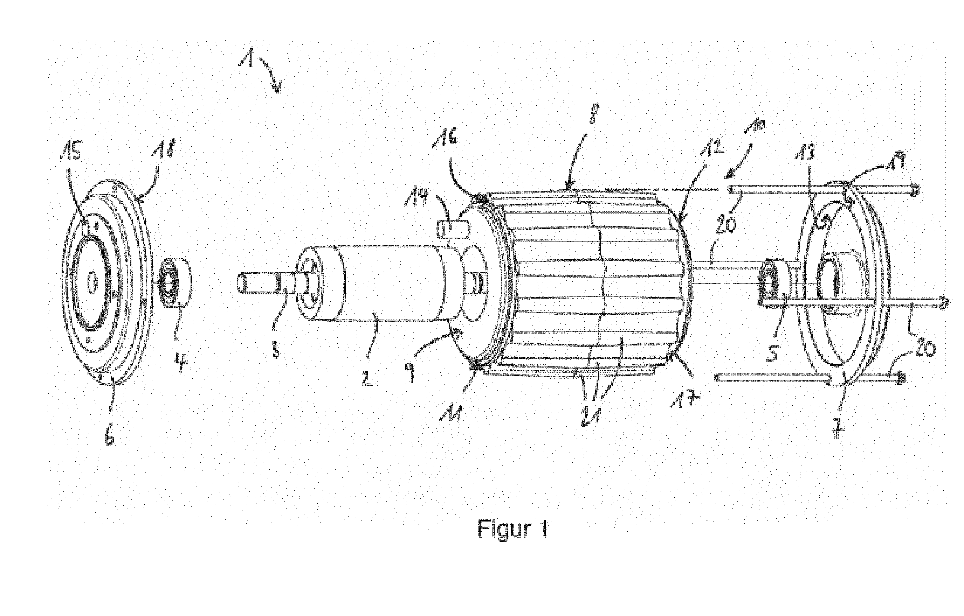

Figur 1 zeigt einen erfindungsgemäßen Elektromotor 1 in einer Explosionsdarstellung. Der erfindungsgemäße Elektromotor 1 weist einen Rotor 2 auf, der auf einer Welle 3 drehfest gehalten ist. Die Welle 3 stützt sich über zwei Wälzlager 4, 5 an einem A-Lagerschild 6 sowie einem B-Lagerschild 7 ab. Ferner weist der Elektromotor 1 einen vergossenen Stator auf. Der Stator ist von einer Umhüllung 8 umgeben. Auf ein zusätzliches Gehäuse, welches den Stator bzw. die Umhüllung 8 mantelseitig umgibt, wird nach dem vorliegenden Ausführungsbeispiel der Erfindung verzichtet; der Elektromotor 1 ist insofern als gehäuseloser Elektromotor 1 ausgebildet.

Im montierten Zustand ist der Rotor 2 mit der Welle 3 koaxial zum Stator angeordnet. Das A-Lagerschild 6 sowie das B-Lagerschild 7 liegen zumindest abschnittsweise stirnseitig an der Umhüllung 8 des Stators an. Zur Positionierung der Lagerschilde 6, 7 relativ zum Stator und der Umhüllung 8 sind an der Umhüllung 8 im Bereich der Stirnseiten 9, 10 als Positioniermittel 11, 12 radiale Referenzflächen 11, 12 ausgebildet. Die Referenzflächen 11, 12 sind vorliegend nach dem Vergießen des Stators durch spanabhebende Bearbeitung der Umhüllung 8 hergestellt worden. Im montierten Zustand liegen die Lagerschilde 6, 7 mit korrespondierenden Anlageflächen 13 (nur dargestellt für das B-Lagerschild 7) an den Referenzflächen 11, 12 an.

Als weiteres Positioniermittel 14 ist an der Umhüllung 8 ein stift- bzw. bolzenförmiger Vorsprung ausgebildet. Der Stift 14 greift im montierten Zustand des Elektromotors 1 in eine in dem A-Lagerschild 6 vorgesehene Bohrung 15 ein und dient als Verdrehschutz bzw. Montagehilfe. Ferner sind als Positioniermittel 16, 17 an der Umhüllung 8 axiale Referenzflächen ausgebildet. Die axialen Referenzflächen 16, 17 wirken im montierten Zustand des Elektromotors 1 mit axialen Anlageflächen 18, 19 der Lagerschilde 6, 7 zusammen.

Zusammenfassend kann daher festgestellt werden, dass nach der ersten Ausführungsform der Erfindung an der Umhüllung 8 drei unterschiedliche Arten von Positioniermitteln 11, 12, 14, 16, 17 ausgebildet sind. Sie dienen der radialen sowie axialen Positionierung der als Verbindungsmodule 6, 7 an die Umhüllung 8 des Stators anzulegenden Lagerschilde 6, 7 sowie als Verdrehschutz.

Auf das Vorsehen von Befestigungsmitteln zum Festlegen der Verbindungsmodule (A-Lagerschild 6, B-Lagerschild 7) an der Umhüllung 8 wird nach dem ersten Ausführungsbeispiel der Erfindung verzichtet. Stattdessen sind zur Verbindung und Festlegung der Lagerschilde 6, 7 vier in Umfangsrichtung verteilt angeordnete Zuganker 20 vorgesehen. Die Zuganker 20 dienen dazu, die Lagerschilde 6, 7 miteinander zu verbinden und relativ zur Umhüllung 8 festzulegen.

Mantelseitig sind an der Umhüllung 8 in Axialrichtung verlaufende Kühlrippen 21 ausgebildet. Die Kühlrippen 21, die als Oberflächen vergrößernde Strukturen dienen, verbessern die Kühlwirkung und die Abführung von Wärme des Stators über die Umhüllung 8. Zur weiteren Verbesserung der Wärmeabfuhr kann zwischen der Umhüllung 8 und dem Verbindungsmodul (Lagerschilde 6, 7) eine Wärmeleitpaste vorgesehen werden. Durch das Vorsehen der Wärmeleitpaste wird die Abfuhr von Wärme insbesondere über die Lagerschilde 6, 7 weiter verbessert.

Nach einer nicht dargestellten alternativen Ausführungsform der Erfindung wird auf den Stift 14 als Positioniermittel verzichtet. Der Stift 14 ist demzufolge optional. Sofern auf den Stift 14 verzichtet wird, kann die an dem A-Lagerschild 6 vorgesehene Bohrung 15 ebenfalls entfallen.

Ferner kann statt des Stifts 14 oder in Ergänzung hierzu eine definierte Zusammenbauposition von A-Lagerschild 6 und Umhüllung 8 durch andere geeignete Positioniermittel bewirkt werden. Beispielsweise kann statt des Stifts 14 eine elektrische Zuleitung für den von der Umhüllung 8 umschlossenen Stator mantelseitig aus der Umhüllung 8 herausgeführt werden. Die elektrische Zuleitung kann durch die Bohrung 15 des A-Lagerschilds geführt werden und auf diese Weise eine definierte lagefeste Zuordnung von Lagerschild 6 und Stator bewirken.

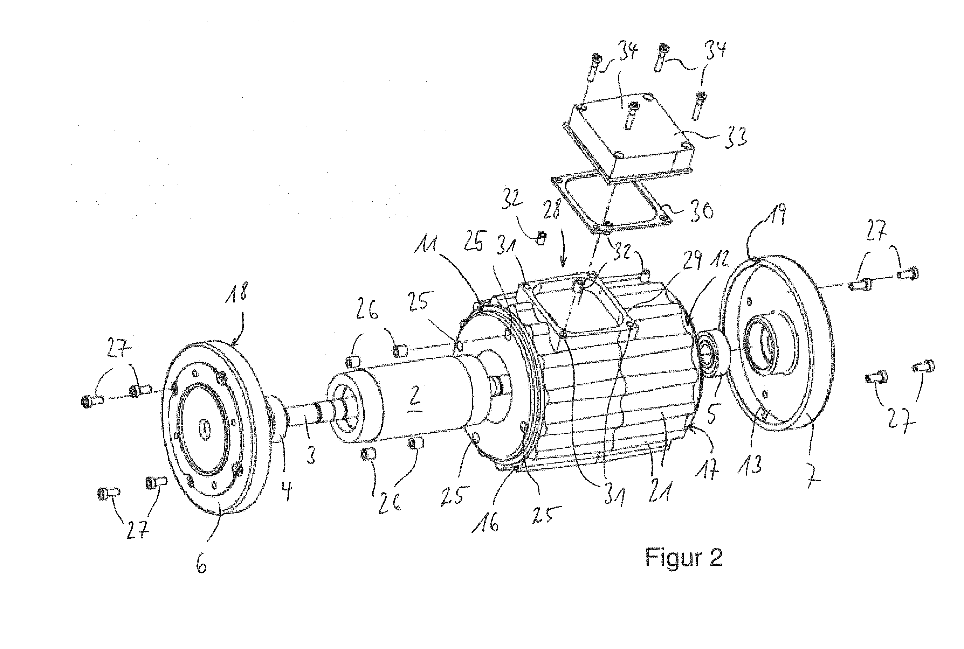

Nach einer alternativen Ausführungsform der Erfindung gemäß Figur 2 weist der Elektromotor 1 in bekannter Weise einen Rotor 2, eine mit dem Rotor 2 drehfest verbundene Welle 3, zwei Wälzlager 4, 5 zum Stützen der Welle 3 sowie zwei Lagerschilde 6, 7 und einen Stator mit einer Umhüllung 8 auf.

In bekannter Weise sind an der Umhüllung 8 radiale Referenzflächen 11, 12 sowie axiale Referenzflächen 16, 17 ausgebildet. An die Referenzflächen 11, 12, 16, 17 werden die Verbindungsmodule (A-Lagerschild 6, B-Lagerschild 7) über ihre jeweiligen Anlageflächen (radiale Anlagefläche 13, axiale Anlagefläche 18, 19) positioniert.

Die Lagerschilde 6, 7 sind nach dem zweiten Ausführungsbeispiel der Erfindung nicht über Zuganker miteinander verbunden. Stattdessen sind an der Umhüllung 8 Bohrungen 25 als Befestigungsmittel für die Lagerschilde 6, 7 vorgesehen. Zur Befestigung der Lagerschilde 6, 7 unmittelbar an der Umhüllung 8 statt am Statorblechpaket werden in die Bohrung 25 Gewindehülsen 26 eingesetzt und beispielsweise verklebt. Über in die Gewindehülsen 26 einzuschraubende Schrauben 27 werden die Lagerschilde 6, 7 an der Umhüllung 8 festgelegt.

Die Umhüllung 8 weist mantelseitig zusätzlich zu den Kühlrippen 21 ein Unterteil eines Klemmkastens zur elektrischen Kontaktierung des Elektromotors 1 als Funktionsausformung 28 auf. Das Klemmkastenunterteil 28 wird während des Vergießens hergestellt. Als Vergussmasse zur Herstellung der Umhüllung 8 mit den Kühlrippen 21 und dem Klemmkastenunterteil 28 kommen beispielsweise ein aushärtbares Epoxidharz bzw. Polyurethan infrage.

An dem Klemmkastenunterteil 28 (Funktionsausformung) ist wiederum eine Planfläche 29 zur Anlage einer Dichtung 30 ausgebildet. Ebenfalls sind an dem Klemmkastenunterteil 28 vier Bohrungen 31 vorgesehen. Die Bohrungen 31 dienen als weitere Befestigungsmittel der Aufnahme von Gewindehülsen 32, in die zur Verbindung des Klemmkastenunterteils 28 mit einem Klemmkastenoberteil 33 Schrauben 34 eingeschraubt werden. Die Bohrungen 31 sind hierbei in gegenüberliegenden Ecken des Klemmkastenunterteils vorgesehen. Die Positionierung der Bohrungen 31 am Klemmkastenunterteil 28 ist so gewählt, dass ein Innenraum des Klemmkastens zuverlässig abgedichtet ist.

Gleiche Bauteile und Bauteilfunktionen sind durch gleiche Bezugszeichen gekennzeichnet.

## Patentansprüche

1. Elektromotor (1) mit einem Rotor (2), mit einer drehfest mit dem Rotor (2) verbundenen und koaxial zu dem Rotor (2) angeordneten Welle (3), mit wenigstens zwei Lager (4, 5) zum Stützen der Welle (3), mit wenigstens einem die Lager (4, 5) aufnehmenden Lagerschild (6, 7) und mit einem dem Rotor (2) zugeordneten Stator, wobei der Stator als ein vergossener Stator ausgebildet ist mit einer Umhüllung (8) aus einer Vergussmasse, **dadurch gekennzeichnet, dass** die Umhüllung (8) Positioniermittel (Referenzflächen 11, 12, 16, 17, Stift 14) zum Positionieren eines Verbindungsmoduls (A-Lagerschild 6, B-Lagerschild 7, Klemmkastenoberteil 33) relativ zu dem Stator und/oder Befestigungsmittel (Bohrung 25, 31) zum Festlegen des Verbindungsmoduls (A-Lagerschild 6, B-Lagerschild 7, Klemmkastenoberteil 33) an der Umhüllung (8) aufweist.

2. Elektromotor (1) nach Anspruch 1, **dadurch gekennzeichnet, dass** der Elektromotor (1) als ein gehäuseloser Elektromotor (1) ausgebildet ist.

3. Elektromotor (1) nach Anspruch 1 oder 2, **dadurch gekennzeichnet, dass** an der Umhüllung (8) mantelseitig zumindest abschnittsweise Kühlrippen (21) und/oder Oberflächen vergrößernde Strukturen ausgebildet sind und/oder dass die Umhüllung (8) Funktionsausformungen (Klemmkastenunterteil 28) aufweist.

4. Elektromotor (1) nach einem der Ansprüche 1 bis 3, **dadurch gekennzeichnet, dass** als Verbindungsmodul das Lagerschild (6, 7) und/oder ein Klemmkasten und/oder Teile des Klemmkastens (Klemmkastenoberteil 33) relativ zum Stator positionierbar sind und/oder an der Umhüllung (8) festlegbar sind.

5. Elektromotor (1) nach einem der Ansprüche 1 bis 4, **dadurch gekennzeichnet, dass** zwischen dem Verbindungsmodul (A-Lagerschild 6, B-Lagerschild 7, Klemmkastenoberteil 33) und der Umhüllung (8) zumindest abschnittsweise eine Wärmeleitpaste vorgesehen ist.

6. Elektromotor (1) nach einem der Ansprüche 1 bis 5, **dadurch gekennzeichnet, dass** als Positioniermittel an der Umhüllung (8) Referenzflächen (11, 12, 16, 17) ausgebildet sind, an die das Verbindungsmodul (A-Lagerschild 6, B-Lagerschild 7, Klemmkastenoberteil 33) mit einer Anlagefläche (13, 18, 19) anlegbar ist.

7. Elektromotor (1) nach einem der Ansprüche 1 bis 6, **dadurch gekennzeichnet, dass** die Referenzfläche als eine radiale, insbesondere zu dem Stator koaxiale radiale Referenzfläche (11, 12) und/oder als eine axiale Referenzfläche (16, 17) ausgebildet ist.

8. Elektromotor (1) nach einem der Ansprüche 1 bis 7, **dadurch gekennzeichnet, dass** die radiale Referenzfläche (11, 12) als eine äußere radiale Referenzfläche (11, 12) oder als innere radiale Referenzfläche ausgebildet ist.

9. Elektromotor (1) nach einem der Ansprüche 1 bis 8, **dadurch gekennzeichnet, dass** als Befestigungsmittel Bohrungen (25, 31) zur Aufnahme von Verbindungselementen (Gewindehülse 26, 32, Schrauben 27, 34) vorgesehen sind.

10. Elektromotor (1) nach einem der Ansprüche 1 bis 9, **dadurch gekennzeichnet, dass** der Elektromotor (1) als Innenläufermotor ausgebildet ist.

11. Elektromotor (1) nach einem der Ansprüche 1 bis 10, **dadurch gekennzeichnet, dass** die Umhüllung (8) aus einem aushärtbaren Epoxidharz und/oder aus Polyurethan als Vergussmasse gebildet ist.

12. Verfahren zum Herstellen eines Stators mit einer Umhüllung (8), wobei die Umhüllung (8) Positioniermittel (Referenzflächen 11, 12, 16, 17, Stift 14) zum Positionieren eines Verbindungsmoduls (A-Lagerschild 6, B-Lagerschild 7, Klemmkastenoberteil 33) relativ zum Stator und/oder Befestigungsmittel (Bohrung 25, 31) zum Festlegen des Verbindungsmoduls (A-Lagerschild 6, B-Lagerschild 7, Klemmkastenoberteil 33) an der Umhüllung (8) aufweist, umfassend die folgenden Verfahrensschritte:
- Positionieren des Stators in einer Vergussform,
- Vergießen des Stators mit einer Vergussmasse zum Ausbilden der Umhüllung (8) und
- Ausbilden der Positioniermittel (11, 12, 14, 16, 17) und/oder der Befestigungsmittel (25, 31).

13. Verfahren nach Anspruch 12, **dadurch gekennzeichnet, dass** die Befestigungsmittel (Bohrung 25, 31) und/oder die Positioniermittel (Referenzflächen 11, 12, 16, 17, Stift 14) zumindest teilweise während des Vergießens des Stators mit der Vergussmasse ausgebildet werden, wobei zu diesem Zweck an der Vergussform vorgesehene Formkonturen, insbesondere Taschen bzw. Kanten abgeformt werden.

14. Verfahren nach Anspruch 12 oder 13, **dadurch gekennzeichnet, dass** die Positioniermittel (Referenzflächen 11, 12, 16, 17, Stift 14) und/oder die Befestigungsmittel (Bohrung 25, 31) nach dem Aushärten der Umhüllung (8) in einem weiteren Verfahrensschritt hergestellt werden.
